# EUROPEAN PATENT APPLICATION

(11) **EP 2 336 874 A2**
(43) Date of publication of application: **22.06.2011**
(21) Application number: 10189477.2
(22) Date of filing: 29.10.2010
(51) Int. Cl.: G06F 3/12

(54) **Image forming system by using e-mail transfer and image forming method by using e-mail transfer**

(30) Priority: 16.12.2009 KR 20090125696
(71) Applicant: Samsung Electronics Co., Ltd., Suwon-si, Gyeonggi-do (KR)
(72) Inventor: Lee, Ki-moon, Gyeonggi-do (KR); Park, Dong-chae, Gyeonggi-do (KR)
(74) Representative: Bruce, Alexander Richard Henry

(57) **Abstract**

An image forming system using an e-mail transfer includes a device to transmit an e-mail to which a file is attached, a first server to receive the e-mail from the device and to store the received e-mail, a second server to receive the e-mail downloaded from the first server, to convert a format of the downloaded e-mail into a preset format, and to transmit a result of the conversion to the device, and an image forming apparatus to request the second server to print the received e-mail according to the result of the conversion and to print the received e-mail according to the request.

## Description

The present invention relates to an image forming system using an e-mail transfer, and an image forming method using an e-mail transfer.

Recently, in a field of office appliances, there has been a move from desktop computers to compact personal computers (PCs), such as laptop computers or Netbooks, and more recently to mobile devices, such as smartphones, iphones, blackberries, etc. According to such a change in the field of office appliances, functions that can be performed in mobile appliances are becoming more varied. One of these functions is transmission and reception of e-mails. Thus, as the functions performed in the mobile devices are increasing, user demand for an ability to print data from the mobile devices is also increasing. Accordingly, in regard to mobile devices, a method of transmitting desired documents anywhere and printing the transmitted documents anywhere is required.

The present invention provides an image forming system using an e-mail transfer and an image forming method using an e-mail transfer.

Additional features and/or utilities of the present invention will be set forth in part in the description which follows and, in part, will be obvious from the description, or may be learned by practice of the invention.

Features and/or utilities of the present invention may be achieved by providing an image forming system using an e-mail transfer which includes a device to transmit an e-mail to which a file is attached, a first server to receive the e-mail from the device and to store the received e-mail, a second server to receive the e-mail downloaded from the first server, to convert a format of the downloaded e-mail into a preset format, and to transmit a result of the conversion to the device, and an image forming apparatus that requests the second server to print the received e-mail according to the result of the conversion and to print the received e-mail according to the request.

The first server may further include a receiving unit to receive an e-mail from the device, a storage unit to store the received e-mail, and a transmitting unit to transmit the stored e-mail to the second server.

The second server may include a mail downloading unit to obtain an identifier of the e-mail stored in the first server, a mail parsing unit to receive an e-mail corresponding to the obtained identifier downloaded, and to parse the downloaded e-mail, a memory to store the parsed e-mail, a document converter to convert a format of the e-mail stored in the memory into the preset format, a notifying unit to notify the device about a result of a conversion, a printing interface unit to receive a printing request based on the result of the conversion from the image forming apparatus, and a file converter to convert the e-mail with the converted format into a file format that can be printed from the image forming apparatus according to the printing request, wherein the printing interface unit transmits the e-mail with the converted format converted by using the file converter to the image forming apparatus.

The image forming apparatus may further include an interface unit to request the second server to print according to the result of the conversion and to receive the e-mail according to the request, and an image forming unit to print the received e-mail.

The device may include a web browser to attach a file to the e-mail and to transmit the e-mail to the first server and an interface unit to receive the result of the conversion from the second server, wherein the web browser may connect to the second server and a document to be printed may be selected from the e-mail via the web browser.

Upon receiving the e-mail from the device, the transmitting unit may notify the second server about the receiving of the e-mail.

The document converter may convert a format of the e-mail according to a priority of at least one file conversion program into the preset format.

The mail parsing unit may parse the e-mail into a main text of the e-mail and the attached file to generate the main text and the attached file as individual job files.

The notifying unit may notify the device about the result of the conversion via an e-mail or short message service (SMS).

Features and/or utilities of the present invention may also be achieved by providing a method of forming an image using an e-mail transfer which includes attaching a file to an e-mail and transmitting the e-mail to a first server, wherein the attaching and transmitting is performed by using a predetermined device, obtaining an identifier of the e-mail from the first server, wherein the obtaining is performed by a second server, receiving the e-mail corresponding to the obtained identifier downloaded from the first server, wherein the receiving is performed by the second server, converting a format of the downloaded e-mail into a preset format, wherein the converting is performed by the second server, notifying the device about a result of the converting, wherein the notifying is performed by the second server, requesting the second server to print the received e-mail according to the result of the converting, wherein the requesting is performed by the image forming apparatus, and printing the received e-mail according to the request, wherein the printing is performed by the image forming apparatus.

The obtaining of the identifier, the identifier may be obtained by using a push mail retrieval method or a pull mail retrieval method.

The method may further include generating separate job files by respectively parsing a main text and the attached file from the downloaded e-mail.

The converting of the downloaded e-mail into the preset format may include converting a format of the e-mail according to a priority of at least one file conversion program.

In the notifying, the device may be notified about the result of the converting by the second server, via an e-mail or a SMS.

In the requesting the second server to print the received e-mail, printing may be requested when the result of the converting is conversion success.

Features and/or utilities of the present invention may also be achieved by providing an image forming system which includes a first server to receive an email having a file attached thereto from a device, to convert the email to a predetermined format, and to transmit a conversion result to the device, and a controller to control an image forming apparatus based on the conversion result of the email.

The first server can receive the email from a second server which receives and stores the email from the device and notifies the first server of receipt of the email.

The controller may determine whether to print the email based on a status of a sender of the email.

The controller may print the email if the sender is allowed to connect to the first server.

The controller may include a mail parsing unit to separate the email into a main text job file and an attached file job file and to determine whether the job files are convertible based on an extension of the main text job file and the attached file job file.

The controller may include a document converter to convert the main text and attached file job files according to a preset format recognizable by the image forming apparatus.

The document converter may convert the main text and attached file job files with at least one conversion application.

When the document converter successfully converts the main text and attached file job files into the preset format, the conversion result is successful and the controller may control the image forming apparatus to print the received email.

Features and/or utilities of the present invention may also be achieved by providing a computer readable recording medium having embodied thereon a program to execute the method of forming an image using an e-mail transfer according to an exemplary embodiment of the present invention.

In an exemplary embodiment, features and/or utilities of the present invention may also be achieved by providing a recording medium having recorded thereon a program to cause a computer system to perform operations in a method of forming an image based on a conversion result of an email having a file attached thereto sent from a device, the method includes receiving the email having the file attached thereto from a first server, obtaining an identifier of the e-mail when a sender of the email can connect to a second server, parsing the email into a main text job file and an attached file job file, converting the main text and attached file job files into preset formats recognizable by an image forming apparatus, notifying the device about a conversion result of the main text and attached file job files, and printing the received e-mail when the conversion result is successful and the identifier is obtained, wherein the conversion result is successful when at least one of the main text job file and the attached file job file is converted into a preset format.

These and/or other features and utilities of the present invention will become more apparent by describing in detail exemplary embodiments thereof with reference to the attached drawings in which:
FIG. 1 illustrates an image forming system using an e-mail transfer according to an exemplary embodiment of the present invention;
FIG. 2 illustrates an e-mail that is transferred according to an exemplary embodiment of the present invention;
FIG. 3 illustrates an application stored in an application database according to an exemplary embodiment of the present invention;
FIG. 4 illustrates a user interface to select a print page according to an exemplary embodiment of the present invention;
FIG. 5 illustrates a first user interface to connect to a second server in an image forming apparatus according to an exemplary embodiment of the present invention;
FIG. 6 illustrates a second user interface to connect to a second server in an image forming apparatus according to an exemplary embodiment of the present invention;
FIG. 7 illustrates a third user interface to connect to a second server in an image forming apparatus according to an exemplary embodiment of the present invention;
FIG. 8 illustrates a user interface to select a printing option according to an exemplary embodiment of the present invention; and
FIG. 9 is a flowchart illustrating a method of printing a document using an e-mail transfer according to an exemplary embodiment of the present invention.

The present invention will now be described more fully with reference to the accompanying drawings, in which exemplary embodiments of the present invention are illustrated. Reference will now be made in detail to the exemplary embodiments of the present invention, examples of which are illustrated in the accompanying drawings, wherein like reference numerals refer to the like elements throughout. The exemplary embodiments are described below in order to explain the present invention by referring to the figures.

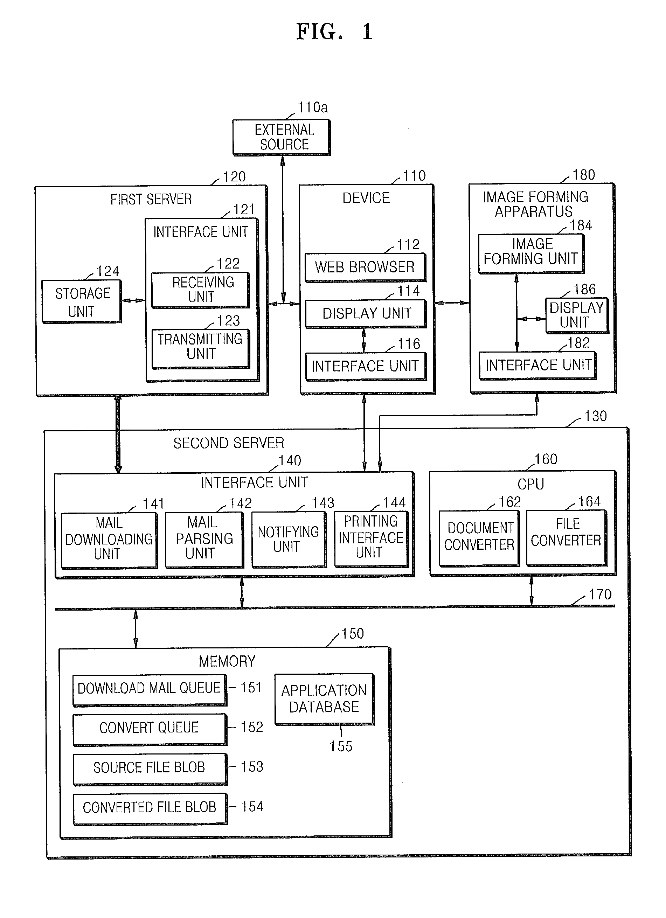

FIG. 1 illustrates an image forming system using an e-mail transfer according to an exemplary embodiment of the present invention.
As illustrated in FIG. 1, the image forming system using an e-mail transfer includes a device 110, a first server 120, a second server 130, and an image forming apparatus 180.

The device 110 can be used to transfer an e-mail and may be any device so long as the device 110 supports a simple mail transfer protocol (SMTP) so that a web browser 112 can be realized in the device 110. Examples of the device 110 include a personal computer (PC), a printer, a mobile phone, a smartphone, a tablet PC, and a Netbook. However, the present invention is not limited thereto. The device 110 can attach a file to be printed to an e-mail and can transmit the e-mail with the attached file to the first server 120. Examples of the file attached to the e-mail include a file generated in the device 110, a file received from an external source 110a, and a file stored in the device 110.

The first server 120 includes an interface unit 121 and a storage unit 124. The interface unit 121 can include a receiving unit 122 to receive an e-mail from the device 110 and a transmitting unit 126 to transmit the e-mail to the second server 130, and the storage unit 124 can store the received e-mail. The first server 120 notifies the second server 130 of the reception of the e-mail by using a push or pull mail retrieval method. When using the push mail retrieval method, the first server 120 notifies the second server 130 that new mail has arrived by using previously registered functions or web service calls. On the other hand, when using the pull mail retrieval method, upon receiving an e-mail, the first server 120 stores the received e-mail and performs no other operation. The first server 120 may be a general, commonly used mail server such as Google or Yahoo. However, the present invention is not limited thereto.

The second server 120 includes an interface unit 140, a memory 150, a central processing unit (CPU) 160, and a bus 170. The interface unit 140, the memory 150, and the CPU 160 are connected to each other via the bus 170, and thus data may be transmitted or received through the bus 170. However, the present invention is not limited thereto. That is, in alternative exemplary embodiments, the interface unit 140 may be wirelessly connected to the CPU 160 and the memory 150. The interface unit 140 includes a mail downloading unit 141, a mail parsing unit 142, a notifying unit 143, and a printing interface unit 144. The memory 150 includes a download mail queue 151, a convert queue 152, a source file blob 153, a converted file blob 154, and an application database 155, and the CPU 160 includes a document converter 162 and a file converter 164.

The mail downloading unit 141 connects to the first server 120 by using a push or pull mail retrieval method to thereby obtain an identification (ID) of an e-mail that has arrived at the first server 120. When using the push mail retrieval method, the mail downloading unit 141 receives a push mail from the first server 120 and checks whether an e-mail has arrived at the first server 120. On the other hand, when using a pull mail retrieval method, the mail downloading unit 141 connects to the first server 120 at predetermined time intervals and checks whether a new e-mail has arrived at the first server 120. The mail downloading unit 141 may check an arrival of an e-mail by using protocols such as Internet messaging access protocol (IMAP), post office protocol version 3 (POP3), and exchange web service (EWS), which are supported by the first server 120. The mail downloading unit 141 checks mail addresses of a transmitter of the e-mail existing in the first server 120 to determine whether the transmitter that has transmitted the e-mail has been granted a right (i.e., authority) to print the email. Whether or not the transmitter has the right to print may be judged by checking whether the transmitter has been granted a right to connect to the second server 130. That is, in exemplary embodiments, if the transmitter is registered as a user allowed to connect to the second server 130, it is determined that the transmitter has the right to print the email. The mail downloading unit 141 writes only IDs of e-mails transmitted by the transmitter in the download mail queue 151 of the memory 150 in an order in which the e-mails are received.

The mail parsing unit 142 reads an ID of an e-mail from the download mail queue 151 of the memory 150 and connects to the first server 120 to check whether another process has been performed on the e-mail corresponding to the read ID. The mail parsing unit 142 downloads an e-mail corresponding to the ID and on which no other process has been performed. The mail parsing unit 142 then parses out a main text and an attached file of the downloaded e-mail and writes files which are generated by parsing to the source file blob 153 of the memory 150. The term "blob" refers to a binary large object (BLOB) which is a file format used when storing an unstructured file, such as an image file, a text file, or an excel file. A blob is a collection of binary data stored as a single entity in a database management system. The mail parsing unit 142 writes only files which are convertible in the second server 130 in the source file blob 153 of the memory 150. The mail parsing unit 142, according to the current exemplary embodiment of the present invention, checks an extension of the file to determine whether the file is convertible in the second server 130. If the file is convertible, the file is written to the source file blob 153 of the memory 150, information about the extension of the file is stored in the memory 150, and an ID of the file written to the source file blob 153 is written to the convert queue 152. Also, in this case, the mail parsing unit 142 deletes the downloaded e-mail, and deletes the ID written to the download mail queue 151. Accordingly, the ID of the file written to the source file blob 153 is written to the convert queue 152 of the storage unit and is deleted in the download mail queue 151.

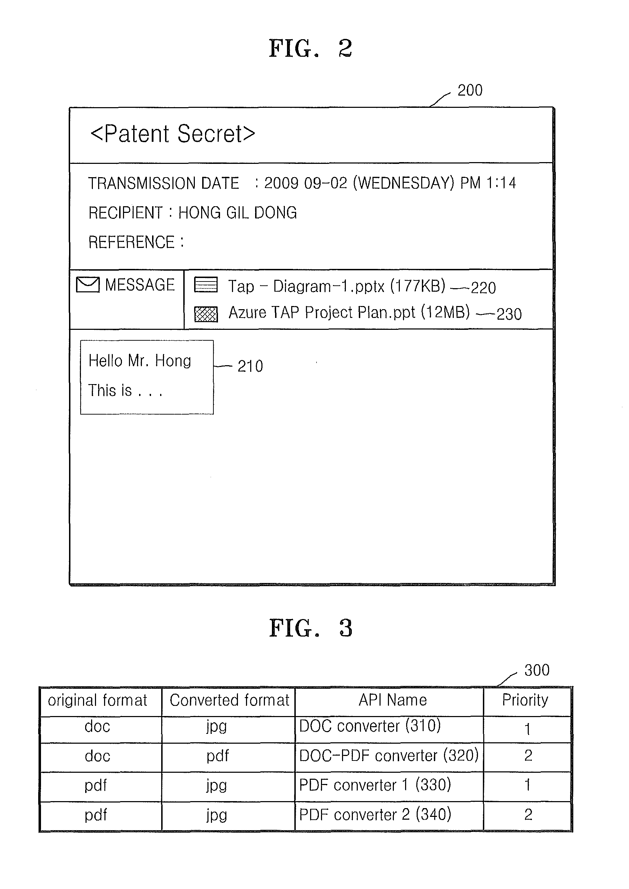

FIG. 2 illustrates an e-mail that is transferred according to an exemplary embodiment of the present invention. When the mail parsing unit 142 downloads the e-mail, as illustrated in FIG. 2, a main text and an attached file of the e-mail are parsed. That is, an html-based e-mail main text 210, a Tap-Diagram-1.pptx file 220, and an Azure TAP Project Plan.ppt file 230 are parsed to generate the main text and the attached file as separate jobs.

Referring to FIG. 1 again, the document converter 162 reads an ID of a file written to the convert queue 152, and obtains a file corresponding to the read ID from the source file blob 153, and performs different format conversions according to the type of the file. The document converter 162 may convert a file according to a preset format, usually into a format that is recognizable in the image forming apparatus 180. In the current exemplary embodiment of the present invention, it is set such that a file is finally converted into a "jpg" format. At least one conversion application may be stored in the application database 155 of the memory 150. Accordingly, the document converter 162 may perform format conversion with respect to a file, by using at least one conversion application stored in the application database 155. In exemplary embodiments, when a plurality of conversion applications are stored in the database 155, format conversion with respect to files is performed according to priorities designated for each of the conversion applications stored in the database 155. That is, format conversion is performed by using a higher priority application, and if a conversion fails, format conversion is performed by using an application having the next highest priority. In exemplary embodiments, a higher priority corresponds to a lower number (see FIG. 3). Also, if a file cannot be converted by using a preset format just once, at least two conversion applications may be continuously used to convert a file format. FIG. 3 illustrates an application stored in an application database according to an exemplary embodiment of the present invention. According to the current exemplary embodiment, a file format may be converted by using an application stored in the application database 300. If the original file format is "doc," the document converter 162 may convert a file format by using a DOC converter 310 and a DOC PDF converter 320, and here, the DOC converter 310 has a higher priority than that of the DOC-PDF converter 320, and thus the file format is converted first by using the DOC converter 310. That is, the original file format "doc," is first converted by using the DOC converter 310. However, if this conversion fails, the DOC-PDF converter 320, which has the next highest priority, is used to convert the file. When the format conversion is successful, no more format conversion is required. However, if the format conversion is not successful, the document converter 162 uses the DOC-PDF converter 320 to perform a format conversion of the file. If the format conversion is successful, the file is converted from a "doc" format to a "pdf" format. However, in the current exemplary embodiment, the file needs to be ultimately converted to a "jpg" file, and thus the document converter 162 performs format conversions from the "pdf" format to the "jpg" format. First, the PDF converter-1 330, having a higher priority, is used to perform a format conversion, and if the conversion is not successful, the PDF converter-2 340 is used to perform a format conversion. When the format conversion is successful, the document converter 162 writes the converted document to the converted file blob 154 of the memory 150, and deletes the ID of the converted document from the convert queue 152. The device 110 is notified about a result of the format conversion, via the notifying unit 143. The device 110 may be notified about a result of the format conversion via an e-mail or short message service (SMS). However, the present invention is not limited thereto.

The notifying unit 143 notifies the device 110 about the result of format conversion performed by the document converter 162. In exemplary embodiments, when the document converter 162 cannot perform format conversion of files, the notifying unit 143 sends a SMS or an e-mail to the device 110, which indicates a failure of a document format conversion. On the other hand, when the document converter 162 has performed a format conversion, the notifying unit 143 sends a SMS or an e-mail to the interface unit 116 of the device 110, which indicates a result of the format conversion. In this case, in exemplary embodiments, a title of the e-mail, a name of an attached file, and an ID of a converted file transmitted by the device 110 may be further included in the SMS or an e-mail. When the device 110 is notified that the document conversion is successful, the document may be printed by using the image forming apparatus 180.

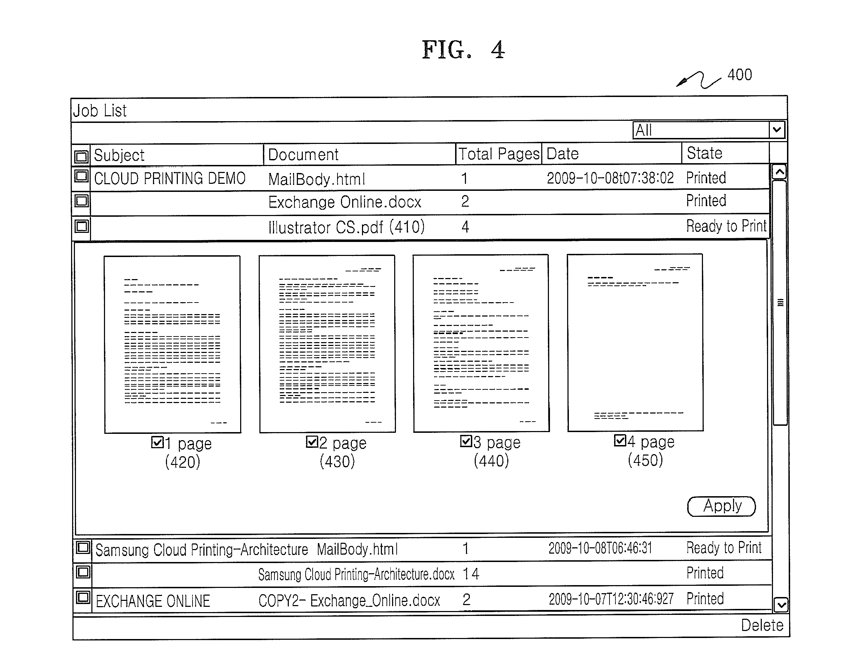

If the converted document has a plurality of pages and only some of the pages are to be selected and printed, the pages to be printed may be selected through the device 110. The device 110 may connect to the second server 130 by using the web browser 112 which may provide a user interface 400 to allow a user to select pages which are to be printed. FIG. 4 illustrates a user interface to select a print page according to an exemplary embodiment of the present invention. When the device 110 connects to the second server 130, the user interface 400, as illustrated in FIG. 4 to select desired print pages is displayed on a display unit 114 of the device 110. For instance, when a name of a document, "illustrator CS.pdf" 410, is selected in FIG. 4, four pages corresponding to the selected document are displayed as thumbnails 420, 430, 440, and 450, and a selection of pages to be printed among these pages may be input via the user interface 400. In the current exemplary embodiment, the pages to be printed may be selected by selecting a box disposed adjacent to the thumbnail images 420, 430, 440, and 450. The selected pages are stored with an extension "prn." The selected pages are set as a printable document by the image forming apparatus 180. However, if no page is selected to be printed, all of the pages of the converted document are set as a printable document by the image forming apparatus 180. However, the present invention is not limited thereto. That is, in alternative exemplary embodiments, if no page is selected to be printed from the user interface 400, all of the pages of the converted document may be set as non-printable by the image forming apparatus 180.

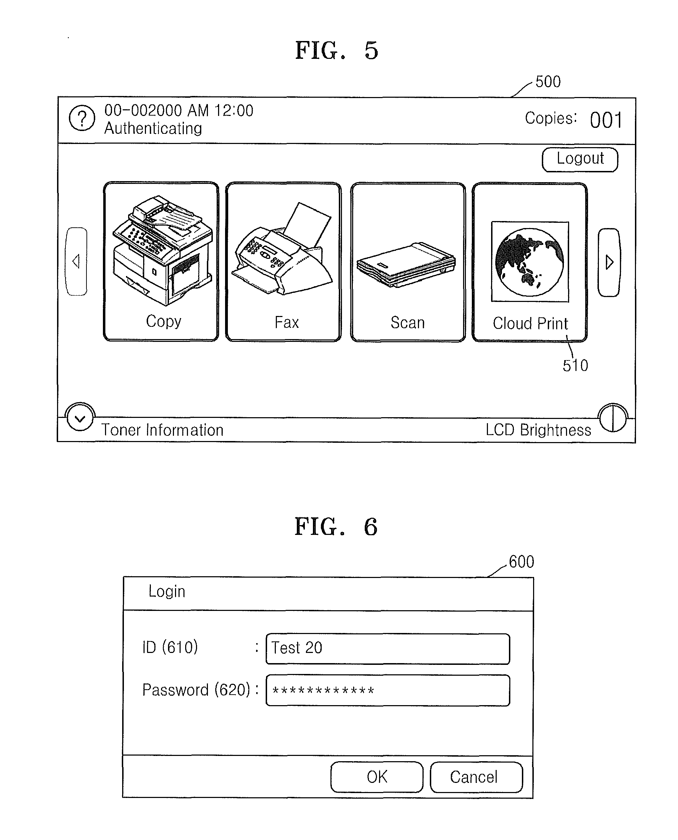

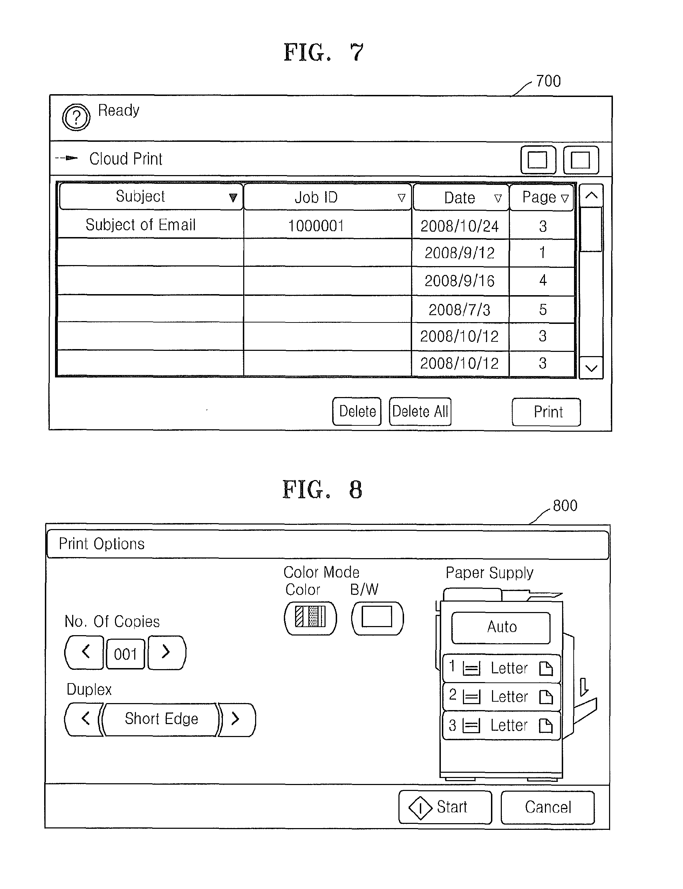

Referring to FIG. 1, the image forming apparatus 180 includes an interface unit 182, an image forming unit 184, and a display unit 186, and when a signal requesting printing of a document is input via the display unit 186, the image forming apparatus 180 connects to the second server 130 via the interface unit 182 and requests printing of the document. The image forming apparatus 180 may request printing of a document, as long as the device 110 is notified about a success of the format conversion. FIGS. 5 through 7 illustrate first through third user interfaces 500, 600, and 700 to connect to the second server 130 in the image forming apparatus 180 according to exemplary embodiments of the present invention. Selection of "Cloud Print" 510 is input to connect to the second server 130 through the user interface 500 illustrated in FIG. 5, and an ID 610 and a password 620 are input in order to log into the second server 130 through the user interface 600 illustrated in FIG. 6, and then selection of a document to be printed is input through the user interface 700, as illustrated in FIG. 7.

FIG. 8 illustrates a user interface 800 to select a printing option according to an exemplary embodiment of the present invention. A printing option may be set through the user interface 800 illustrated in FIG. 8 and displayed on the display unit 186 of the image forming apparatus 180. In exemplary embodiments, the printing option may include all types of options that may be set in a general image forming apparatus 180. When selection to start printing is input through the user interface 800 of FIG. 8, the image forming apparatus 180 requests the second server 130 for the document selected via the user interfaces 500, 600, and 700 of FIGS. 5 through 7.

The second server 130 receives a request for a document from the image forming apparatus 180 via the printing interface unit 144. The file converter 164 converts the requested document into a PCL or XPS file format that can be printed according to options set by the image forming apparatus 180. The converted document is transmitted to the image forming apparatus 180 through the printing interface unit 144, and the image forming unit 184 of the image forming apparatus 180 prints the received document.

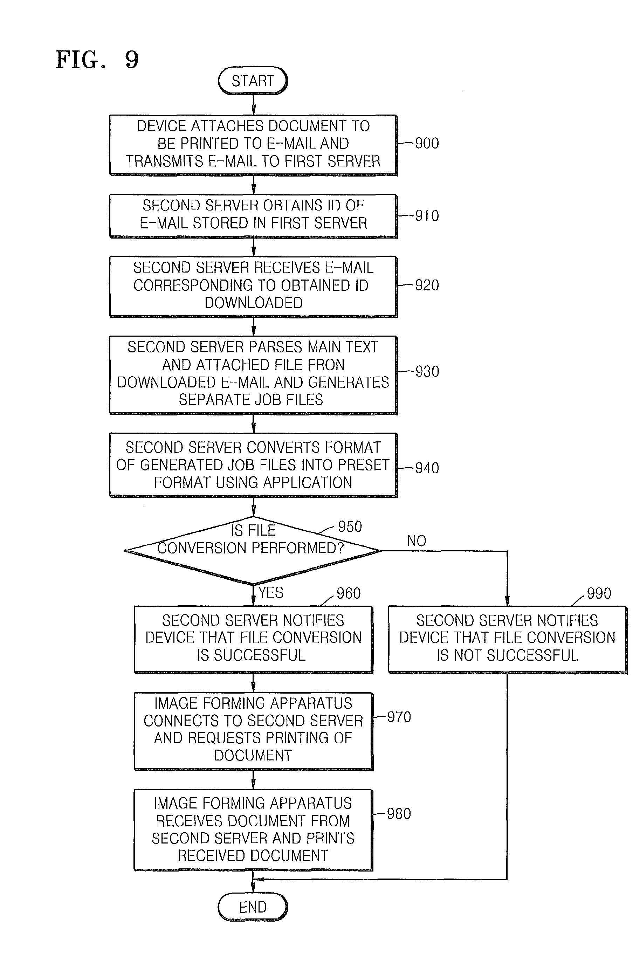

FIG. 9 is a flowchart illustrating a method of printing a document using an e-mail transfer according to an exemplary embodiment of the present invention.

Hereinafter, the method of FIG. 9 will be described with reference to FIGS. 1 through 8.

In operation 900, a device 110 attaches a document to be printed to an e-mail and transmits the e-mail to a first server. In detail, a device 110, which supports a SMTP as a web browser is realized, transmits the e-mail with the attached document to be printed to the first server. Examples of the first server according to the current exemplary embodiment of the present invention include general, commonly used mail servers such as Google or Yahoo. However, the present invention is not limited thereto. The e-mail transmitted to the first server can be stored in the first server.

In operation 910, a second server obtains an ID of the e-mail stored in the first server. The second server connects to the first server by using a push or pull retrieval method and obtains the ID of the e-mail that has arrived at the first server. However, the ID of the e-mail is obtained only when a transmitter of the e-mail can connect to the second server and has a right or privilege to print the document.

In operation 920, the second server downloads the e-mail corresponding to the obtained ID. In detail, the second server receives the e-mail corresponding to the obtained ID from the first server. In this case, the second server downloads only e-mails on which no other process has been performed.

In operation 930, the second server parses a main text of the e-mail and the attached document in order to generate them as individual job files.

In operation 940, the second server converts the generated job files into preset formats by using an application. According to the current exemplary embodiment of the present invention, the files are converted to a "jpg" format which is recognizable to general image forming apparatuses. However, the present exemplary embodiment is not limited thereto. The second server may perform conversion of file formats according to priorities of a plurality of applications.

Also, different types of applications may be performed sequentially in order to perform the conversion of the file formats.

In operation 950, the second server checks whether the files are converted. If the file conversion is successful, the method proceeds to operation 960, and if the file conversion is not successful, the method proceeds to operation 990.

In operation 960, the second server notifies the device 110 that the file conversion is successful. The second server may notify the device 110 about the success of the file conversion via a SMS or an e-mail. In this case, a title of the e-mail transmitted by the device, a name of the attached document, and an ID of a converted file may be further included. Due to the notification sent by the second server, the user of the device may be aware that a document can be printed by using the image forming apparatus 180.

In operation 970, the image forming apparatus connects to the second server and requests printing of the document. In detail, the image forming apparatus 180 requests printing of the document through the user interfaces 500, 600, and 700 illustrated in FIGS. 5 through 7 by connecting to the second server. However, the image forming apparatus 180 may request printing of the document only when the device is notified that the file conversion is successful. Also, the image forming apparatus 180 may request printing of the document when the document to be printed is selected and printing options for the document are set. The second server converts the requested document into a PCL or XPS file format that can be printed by the image forming apparatus according to the request of the image forming apparatus to print the document.

In operation 980, the image forming apparatus 180 receives the document from the server and prints the received document. The image forming apparatus 180 receives the document in the PCL or XPS format, and prints the received document. Here, the image forming apparatus 180 needs to have a right to connect to the second server.

In operation 990, the second server notifies the device 110 that the file conversion is not successful. The second server notifies the device 110 via a SMS or an e-mail. Due to the notification sent by the second server, the user of the device may be aware that printing of the document by using the image forming apparatus 180 is not possible.

One or more of the above exemplary embodiments of the present invention can be written as computer programs and can be implemented in general-use digital computers that can execute the programs by using a computer readable recording medium. Also, data structures in the above-described exemplary embodiments of the present invention may be written to a computer readable recording medium by using various means. Examples of the computer readable recording medium include magnetic storage media (e.g., ROM, floppy disks, hard disks, etc.) and optical recording media (e.g., CD-ROMs, or DVDs).

While the present invention has been particularly illustrated and described with reference to exemplary embodiments thereof, it will be understood by those of ordinary skill in the art that various changes in form and details may be made therein without departing from the scope of the present invention as defined by the appended claims. The exemplary embodiments should be considered in a descriptive sense only and not for purposes of limitation. Therefore, the scope of the present invention is defined not by the detailed description of the present invention but by the appended claims, and all differences within the scope will be construed as being included in the present invention.

## Claims

1. An image forming system using an e-mail transfer, the image forming system comprising:
a device to transmit an e-mail to which a file is attached;
a first server to receive the e-mail from the device and to store the received e-mail;
a second server to receive the e-mail downloaded from the first server, to convert a format of the downloaded e-mail into a preset format, and to transmit a result of the conversion to the device; and
an image forming apparatus to request the second server to print the received e-mail according to the result of the conversion and to print the received e-mail according to the request.

2. The image forming system of claim 1, wherein the first server comprises:
a receiving unit to receive an e-mail from the device;
a storage unit to store the received e-mail; and
a transmitting unit to transmit the stored e-mail to the second server.

3. The image forming system of claim 1, wherein the second server comprises:
a mail downloading unit to obtain an identifier of the e-mail stored in the first server;
a mail parsing unit to receive an e-mail corresponding to the obtained identifier downloaded and to parse the downloaded e-mail;
a memory to store the parsed e-mail;
a document converter to convert a format of the e-mail stored in the memory into the preset format;
a notifying unit to notify the device about a result of a conversion;
a printing interface unit to receive a printing request based on the result of the conversion from the image forming apparatus; and
a file converter to convert the e-mail with the converted format into a file format that can be printed from the image forming apparatus according to the printing request,
wherein the printing interface unit transmits the e-mail with the converted format converted by using the file converter to the image forming apparatus.

4. The image forming system of claim 1, wherein the image forming apparatus comprises:
an interface unit to request the second server to print according to the result of the conversion and receive the e-mail according to the request; and
an image forming unit to print the received e-mail.

5. The image forming system of claim 1, wherein the device comprises:
a web browser to attach a file to the e-mail and to transmit the e-mail to the first server; and
an interface unit to receive the result of the conversion from the second server,
wherein the web browser connects to the second server and a document to be printed is selected from the e-mail via the web browser.

6. The image forming system of claim 2, wherein upon receiving the e-mail from the device, the transmitting unit notifies the second server about the receiving of the e-mail.

7. The image forming system of claim 3, wherein the document converter converts a format of the e-mail according to a priority of at least one file conversion program into the preset format.

8. The image forming system of claim 3, wherein the mail parsing unit parses the e-mail into a main text of the e-mail and the attached file to generate the main text and the attached file as individual job files.

9. The image forming system of claim 3, wherein the notifying unit notifies the device about the result of the conversion via an e-mail or short message service (SMS).

10. A method of forming an image using an e-mail transfer, the method comprising:
attaching a file to an e-mail and transmitting the e-mail to a first server, wherein the attaching and transmitting is performed by using a predetermined device;
obtaining an identifier of the e-mail from the first server, wherein the obtaining is performed by a second server;
receiving the e-mail corresponding to the obtained identifier downloaded from the first server, wherein the receiving is performed by the second server;
converting a format of the downloaded e-mail into a preset format, wherein the converting is performed by the second server;
notifying the device about a result of the converting, wherein the notifying is performed by the second server;
requesting the second server to print the received e-mail according to the result of the converting, wherein the requesting is performed by the image forming apparatus; and
printing the received e-mail according to the request, wherein the printing is performed by the image forming apparatus.

11. The method of claim 10, wherein in the obtaining of the identifier, the identifier is obtained by using a push mail retrieval method or a pull mail retrieval method.

12. The method of claim 10, further comprising generating separate job files by respectively parsing a main text and the attached file from the downloaded e-mail.

13. The method of claim 10, wherein the converting of the downloaded e-mail into the preset format comprises converting a format of the e-mail according to a priority of at least one file conversion program.

14. The method of claim 10, wherein in the notifying, the device is notified about the result of the converting by the second server, via an e-mail or a SMS.

15. The method of claim 10, wherein in the requesting the second server to print the received e-mail, printing is requested when the result of the converting is conversion success.
